# EUROPEAN PATENT SPECIFICATION

(11) **EP 4 253 175 B1**
(45) Date of publication and mention of the grant of the patent: **13.05.2026**
(21) Application number: 20962691.0
(22) Date of filing: 24.11.2020
(51) Int. Cl.: B60T 17/00, B08B 15/04, F16D 65/00

(54) **PROTECTION DEVICE, DUST REMOVAL DEVICE, WHEEL RIM STRUCTURE AND AUTOMOBILE**
SCHUTZVORRICHTUNG, STAUBENTFERNUNGSVORRICHTUNG, RADFELGENSTRUKTUR UND AUTOMOBIL
DISPOSITIF DE PROTECTION, DISPOSITIF D'ÉLIMINATION DE POUSSIÈRE, STRUCTURE DE JANTE ET VOITURE

(43) Date of publication of application: 04.10.2023
(73) Proprietor: Wuhan Lotus Cars Co., Ltd., Wuhan, Hubei 430056 (CN)
(72) Inventor: ZHENG, Bowen, Hangzhou Bay New District Ningbo, Zhejiang 315336 (CN); ZHANG, Xiaoqian, Hangzhou Bay New District Ningbo, Zhejiang 315336 (CN)
(74) Representative: Zaboliene, Reda
(86) International application number: PCT/CN2020/131202
(87) International publication number: WO 2022/109800

(56) References cited:
- EP-B1- 3 414 110
- CH-A5- 687 013
- CN-A- 110 504 784
- CN-A- 110 566 609
- CN-A- 111 842 393
- CN-A- 111 845 686
- CN-A- 111 845 686
- CN-U- 205 841 574
- CN-U- 209 139 450
- US-A1- 2009 265 880

## Description

### TECHNICAL FIELD

This specification relates to the technical field of parts of automobiles, and in particular, to a protection device, a dust removal device, a wheel rim structure, and an automobile.

### BACKGROUND

With more and more rapid development of economy of our country, holdings of cars appears a tendence of increasing year by year. However, with the increase of the number of cars, environmental problems brought by cars are also increasingly serious. How to make vehicles be more environmentally friendly, and how to reduce dust emissions of vehicles so as to enhance market competitiveness are also topics studied competitively by major engine manufacturers.

Many countries, led by the United States, are paying close attention to the problem of emission of brake dust. At present, automotive research organizations of many countries are studying generation principles and control methods of brake dust. It can be predicted that laws and regulations limiting brake dust will be implemented in the future. If domestic auto companies want to meet global requirements, they especially need to arrange research and development in advance to win stronger market competitiveness for themselves.

A brake system of a car generates friction by a pressure between a metal brake plate and a friction piece composed of composite friction material. In the friction pair formed by the brake plate and the friction piece, in order to ensure that the vehicle can obtain a stable friction torque under various working conditions, slight wear of the brake plate and the friction material may be caused during braking, so it is inevitable to produce wear particles of different sizes, namely brake dust, during the wear process. Brake dust will attach to the vehicle's body and rims and affects the appearance of the vehicle. At the same time, the brake dust will also be discharged into the atmosphere with an air flow generated when the vehicle drives and pollute the environment. How to reduce or eliminate the pollution of brake dust to the environment is a major pain point in the research of automobile enterprises at present.

Friction piece dust of passenger cars mainly consists of the following two types.

The first is low-temperature mechanical friction dust, which is mainly produced by mechanical shedding of both sides caused by mutually shearing of rough surfaces of a friction piece and of a brake plate at the micro level. This type of dust has particle size of mostly above 10 µm, is mainly attached to surfaces of rims or deposited on the ground, and will not generate a great impact on the environment and human health.

The second is high-temperature chemical agglutination dust, which is mainly microparticles produced by gas generated by decomposition of chemical substances in friction materials at high temperature and then cooled and condensed. This type of dust has a particle size of mostly below 10 µm, if it is discharged into the atmosphere, it will be suspended in the air for a long time and cause environmental pollution. At the same time, it is also prone to be inhaled by human bodies and cause disease.

In conventional patents, dust around a brake caliper is absorbed by a filter box or a filter screen. Since they are in a normally open state, dust at edges of wheels and brake dust are adsorbed by the filter box or the filter screen without difference, which seriously affects service life of the filter screen.

Therefore, in order to solve the above problem, it is required to provide a protection device, a dust removal device, a wheel rim structure, and an automobile.

In a reference document D1 (CN111845686A), the invention relates to the technical field of automobiles, in particular to a gas conduction mechanism, a brake dust absorption device and an automobile. The gas conduction mechanism comprises a first air guide pipe and a second air guide pipe. One end of the first air guide pipe is connected with ato-be-installed object, and the first air guide pipe is provided with a first ventilation opening. The first air guide pipe is sleeved with the second air guide pipe, the first air guide pipe is in rolling connection with the second air guide pipe, and the second air guide pipe is provided with asecond ventilation opening and a mass block; the mass block determines a first deceleration and a second deceleration of the to-be-installed object by adjusting the gravity center of the second air guide pipe; the second air guide pipe rotates under the action of the first deceleration, so that the first ventilation opening communicates with the second ventilation opening, and air exhaust is achieved; the second air guide pipe rotates under the action of the second deceleration, so that the first ventilation opening and the second ventilation opening are staggered, and air blocking is achieved. The gas conduction mechanism provided by the invention has the characteristics of not additionally consuming energy and prolonging the service life of the dust absorption device.

### SUMMARY OF THE DISCLOSURE

Aiming at the above problems in the prior art, a purpose of this specification is to provide a protection device, a dust removal device, a wheel rim structure, and an automobile, which have simple structures, automatically conduct according to inertia generated by braking, prevent vehicles from adsorbing or collecting non-braking dust such as wheel-side dust without braking, and use pure mechanical structures without additional energy consumption.

The invention is set out in the appended set of claims.

According to the specific embodiments provided by this specification, the present invention has the following technical effect.
(1) The protection device, the dust removal device, the wheel rim structure, and the automobile provided by this specification have characteristics of simple structures and low integration cost. They are automatically turned on according to inertia generated by braking, so as to prevent a vehicle from adsorbing or collecting non-braking dust such as wheel-edge dust in the condition of no braking. Pure mechanical structures are used and no additional energy is consumed.
(2) By simple mechanical structures, it is realized that the first blades and the second blades relatively rotate to expose some of gaps of a spoke of a vehicle when the vehicle is braking. The dust removal device collects dust generated during braking using air flows passing through the gaps of the spoke. The first blades and the second blades shield the gaps of the spoke of the vehicle when the vehicle is not braking, so as to protect the dust removal device from adsorbing or collecting wheel-edge dust.
(3) Small mounting space and light weight are required. In addition, since no additional verification and matching is required, it is possible to directly perform added assembly for existing vehicles, integration is easy.
(4) The present application is mainly aimed at collecting hazardous chemical agglomerated dust; at the same time, it only conducts air flows to adsorb dust in high intensity and high temperature braking conditions to avoid inhaling impurities in the air in non-braking conditions or low intensity and low temperature braking conditions, thus improving service time of the dust absorption device.
(5) In the dust removal device of the present application, the adsorption structure is a non-filter screen structure, and there is no filter screen and other consumables. It can be continuously used after cleaning or collecting dust on the adsorption structure during normal maintenance or car washing of a vehicle, material consumption caused by replacement is avoided, and the problem that the adsorption effect is affected due to saturation of the adsorption structure can also be solved.

### BRIEF DESCRIPTION OF THE DRAWINGS

In order to explain technical solutions of the present application more clearly, drawings required to be used in description of embodiments or of the prior art will be briefly introduced below. It is obvious that the drawings in the following description are only some embodiments of the present application. For those skilled in the art, other drawings can be obtained according to these drawings without paying creative work.
FIG. 1 is a structural schematic view of a protection device provided by the present application.
FIG. 2 is a structural schematic view of another state of the protection device provided by the present application.
FIG. 3 is an exploded view of a wheel rim structure provided by the present application.
FIG. 4 is a structural schematic view of a first protection structure provided by the present application.
FIG. 5 is a structural schematic view of a second protection structure provided by the present application.
FIG. 6 is a partial schematic view of the protection structure provided by the present application, wherein a resilient member is in an unstressed state.
FIG. 7 is a partial schematic view of the protection structure provided by the present application, wherein the resilient member is in a stressed state.
FIG. 8 is a schematic view of first blades and second blades being staggered to cover spoke gaps provided by the present application.
FIG. 9 is a schematic view of the first blades and the second blades overlapping to expose second gaps provided by the present application.
FIG. 10 is a structural schematic view of an adsorption structure provided by the present application.
FIG. 11 is a schematic view of a wheel rim structure provided by the present application.

Among them, the reference numbers in the drawings are as follows:
1-first protection structure; 11-first blade; 111-second protrusion; 12-first rotating ring; 121-limitng hole; 122-notch; 123-mounting boss; 1231-limiting board; 2-second protection structure; 21-second blade; 211-limit guide groove; 22-second rotating ring; 3-guide structure; 21-first protrusion; 32-stopping sheet; 33-resilient member; 4-hub; 5- spoke; 51-hollow out portion; 6-wheel flange; 71-buffer block; 72-screw; 8-adsorption structure; 81-casing frame; 82-third blade; 83-connecting member; 831-insulating washer; 832-fastening screw; 833-mounting convex.

### DETAILED DESCRIPTION

The term "an/one embodiment" or "embodiment" herein refers to a specific feature, structure or feature that can be included in at least one implementation of the present application. In the description of the present application, it should be understood that orientations or position relationships indicated by the terms "up", "down", "left", "right", "top", "bottom", and so on are based on orientations or position relationships shown in the attached drawings, which are only intended to facilitate describing the present application and simplifying the description, rather than indicating or implying that a device or element referred to must have a specific orientation, or be constructed and operated in a specific orientation, and thus should not be understood as any limit to the present application. In addition, the terms "first" and "second" are only used for describing purposes, and should not be understood as indicating or implying relative importance or implicitly indicating the number of indicated technical features. Therefore, the features defined as "first" and "second" can explicitly or implicitly include one or more such features. Moreover, the terms "first", "second" and the like are used to distinguish similar objects, and need not be used to describe a specific sequence or order. It should be understood that data used in this way can be interchanged in appropriate cases, so that the embodiments of the present application described herein can be implemented in order other than those illustrated or described herein.

A purpose of the present application is to provide a protection device, a dust removal device, a wheel rim structure, and an automobile, which are simple in structure and are automatically turned on according to inertia generated by braking, so as to avoid a vehicle from adsorbing or collecting of non-brake dust, such as wheel-edge dust, in a non-braking condition, and use purely mechanical structures and do not consume additional energy.

In order to make the above purposes, features and advantages of the present application be more obvious and understandable, the present application will be further described in detail below in combination with the attached drawings and specific embodiments.

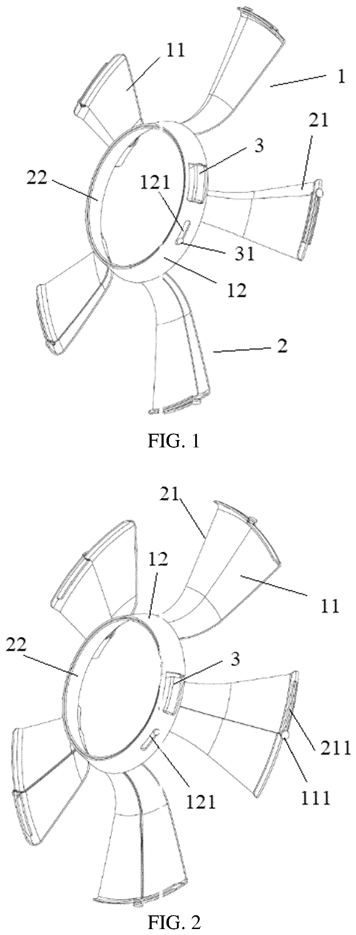

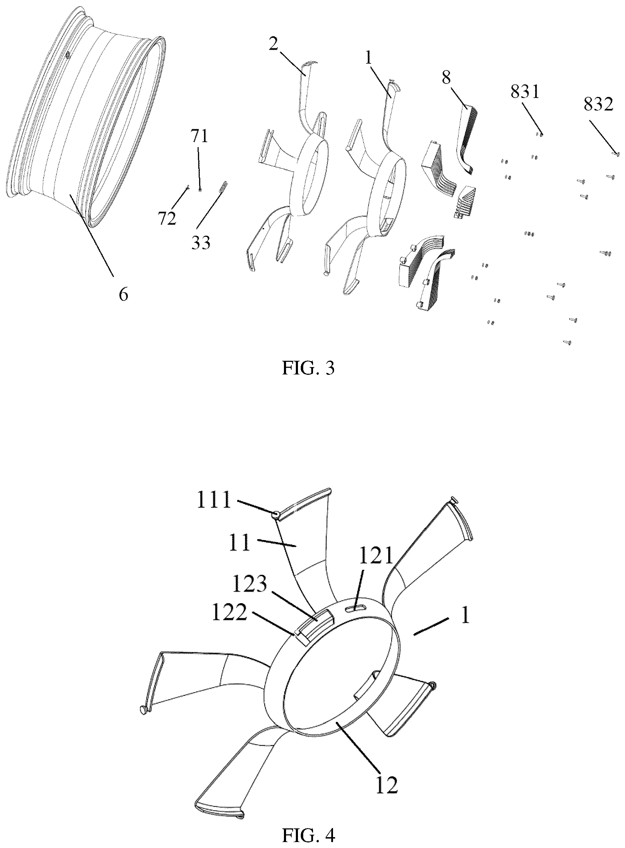

Referring to FIGS. 1-7, a protection device includes a first protection structure 1, a second protection structure 2, and a guide structure 3; the first protection structure 1 includes a first blade 11 and a first rotating ring 12, and one end of the first blade 11 is connected to the first rotating ring 12; the second protection structure 2 includes a second blade 21 and a second rotating ring 22, and one end of the second blade 21 is connected to the second rotating ring 22; the first rotating ring 21 is sleeved outside the second rotating ring 22, the guide structure 3 is arranged between the first rotating ring 21 and the second rotating ring 22, the first rotating ring 21 is rotatable relative to the second rotating ring 22, so that the first blade 11 and the second blade 21 overlap or are staggered; the guide structure 3 is configured for limiting a rotation travel of the first rotating ring 12 relative to the second rotating ring 22. The present application provides a protection device, a dust removal device, a wheel rim structure, and an automobile, which are simple in structure and are automatically turned on according to inertia generated by braking, so as to avoid a vehicle from adsorbing or collecting of non-brake dust, such as wheel-edge dust, in a non-braking condition, and use purely mechanical structures and do not consume additional energy. In other embodiments, the first protection structure may have a plurality of first blades; similarly, the second protection structure may have a plurality of second blades. The first blades and the second blades have certain gaps at an axial direction, these gaps prevent direct contact among the first blades and the second blades, and do not affect overlapping of the first blades and the second blades when the first rotating ring and the second rotating ring rotate relative to each other. Furthermore, small mounting space and light weight are required. In addition, since no additional verification and matching is required, it is possible to direct perform added assembly for existing vehicles, integration is easy.

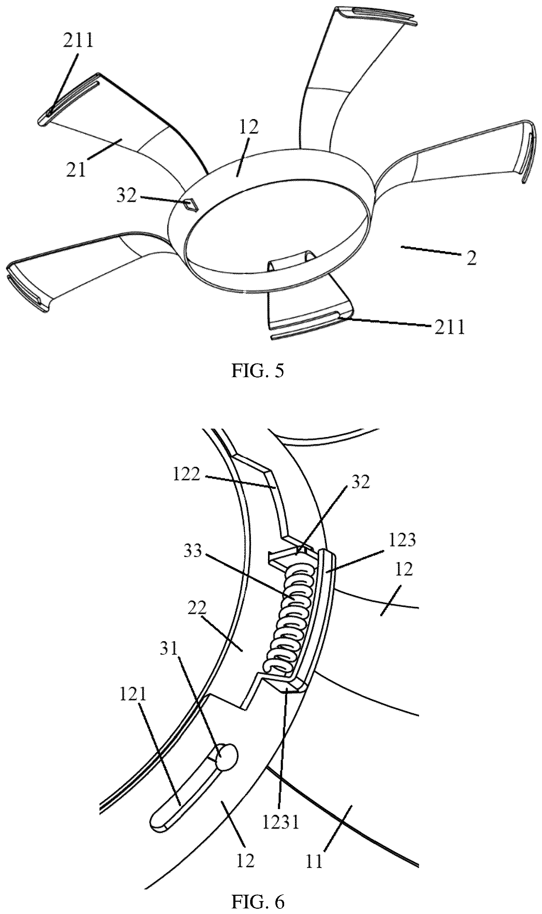

In a possible embodiment, as shown in FIGS. 6-7, the first rotating ring 12 is provided with a limiting hole 121, a notch 122, and a mounting boss 123, the mounting boss 123 is connected to a side of the notch 122 close to the second blades 21, and a side of the mounting boss 123 close to the limiting hole 121 has a limiting board 1231; the guide structure 3 includes a first protrusion 31, a stopping sheet 32, and a resilient member 33, wherein one end of the stopping sheet 32 is connected to the second rotating ring 22, and another end of the stopping sheet 32 passes through the notch 122; one end of the first protrusion 31 is connected to the second rotating ring 22, and another end of the first protrusion 31 passes through the limiting hole 121; one end of the resilient member 33 is connected to the stopping sheet 32, and another end of the resilient member 33 is connected to the limiting board 1231; the resilient member 33 is elastically deformable along a length direction of the mounting boss 123, and the first protrusion 31 is movable in the limiting hole 121. The resilient member is configured to: when a vehicle changes from a decelerating process to stationary, or movement at a constant speed, or accelerating movement, by a reaction force of elastic deformation of the resilient member, cause the first blades and the second blades to reset from an overlapping state to a staggered state. A length of the notch is greater than a length of the mounting boss, so that during axial mounting, the mounting boss can pass through the notch, allowing the first protection structure to be mounted on the second protection structure.

In a possible embodiment, the second rotating ring 22 further has a connection part configured to be fixed with a hub 4 of a vehicle; in a condition that the second rotating ring 22 is connected with the hub 4, the second rotating ring 22 is coaxial with the hub 4, and the second blades 21 cover first gaps in gaps of a spoke 5 of the vehicle; the second protection structure 2 is synchronously rotatable with the hub 4, and the second protection structure 2 is capable of driving the first protection structure 1 to rotate such that the first blades 11 of the first protection structure 1 cover or expose second gaps in the gaps 5 of the spoke of the vehicle; the second gaps are remained gaps in the gaps of the spoke 5 other than the first gaps. The gaps of the spoke are hollow out portions 51 of the spoke of the vehicle. The connection part is fixed to the hub by means of fastening members/adhesion/injection molding/clamping, etc.

In a possible embodiment, in a condition that a vehicle is static, the first protection structure 1 and the second protection structure 2 are static relative to each other, and the first blades 11 and the second blades 21 are stagger such that the first blades 11 covers the second gaps in the gaps of the spoke 5; in a condition that the vehicle drives at a constant speed or drives at an increasing speed, the first protection structure 1 and the second protection structure 2 rotate synchronously, and the first blades 11 and the second blades 21 are stagger such that the first blades 11 covers the second gaps in the gaps of the spoke 5; in a condition that the vehicle drives at a decreasing speed, the first protection structure 1 and the second protection structure 2 rotate relative to each other and drive the first blades 11 and the second blades 12 at least partially overlap so as to at least partially expose the second gaps in the gaps of the spoke 5. By simple mechanical structures, it is realized that the first blades and the second blades relatively rotate to expose some of the gaps of the spoke of the vehicle when the vehicle is braking. The dust removal device collects dust generated during braking using air flows passing through the gaps of the spoke. The first blades and the second blades shield the gaps of the spoke of the vehicle when the vehicle is not braking, so as to protect the dust removal device from adsorbing or collecting wheel-edge dust.

In a possible embodiment, in a condition that the first blades 11 and the second blades 21 are stagger, the resilient member 33 is in an unstressed state, and the first protrusion 31 is at an end of the limiting hole 121 close to the mounting boss 123; in a condition that the first blades 11 and the second blades 21 overlap, the resilient member 33 is in a compressed state, and the first protrusion 31 is at an end of the limiting hole 121 away from the mounting boss 123.

In a possible embodiment, in a condition that the first blades 11 and the second blades 21 are stagger, the resilient member 33 is in an unstressed state, and the first protrusion 31 is at an end of the limiting hole 121 away from the mounting boss 123; in a condition that the first blades 11 and the second blades 21 overlap, the resilient member 33 is in a tensile state, and the first protrusion 31 is at an end of the limiting hole 121 close to the mounting boss 123.

In a possible embodiment, a length of the mounting boss 123 is not less than a length of the limiting hole 121.

In a possible embodiment, the limiting hole 121 is a strip hole, and the limiting hole 121 is configured to limit a relative rotation distance between the first protection structure 1 and the second protection structure 2.

In a possible embodiment, the limiting hole 121 is communicated with the notch 122. Communicating the limiting hole 121 with the notch 122 is convenient for mounting the first protrusion 31 into the limiting hole 121 through the notch 122.

In a possible embodiment, the resilient member 33 may be a spring, an air bag, a rubber block, a sponge block, or other resilient components.

In a possible embodiment, the first rotating ring 12 and the second rotating ring 22 are arranged co-axially.

In a possible embodiment, a screw 72 is further included, the first protrusion 31 is specifically a cylindrical buffer block 71, the buffer block 71 is provided with a screw hole, and the screw 72 passes through the screw hole of the buffer block 71 and is fixedly connected with the second rotating ring 22. When an inertia force of the vehicle is in the same direction as a force application direction of the spring, the buffer block 71 bears the inertia force of the vehicle so that no relative rotation occurs between the first rotating ring and second rotating ring.

In a possible embodiment, the screw 72 sequentially passes through the screw hole of the buffer block 71 and the second rotating ring 22, and an end of the screw 72 is fixed to the hub 4 of the automobile.

In a possible embodiment, ends of the second blades 21 are provided with limit guide grooves 211, and ends of the first blades 11 are provided with second protrusions 111, the second protrusions 111 slidably match the limit guide grooves 211, and relative rotation between the first blades 11 and the second blades 21 is guided and limited by sliding of the second protrusions 111 in the limit guide grooves 211.

In a possible embodiment, the second rotating ring 22 is rotatably connected with the first rotating ring 12 by means of a bearing, oil, or direct contact friction. It is ensured that a friction force between the first rotating ring and the second rotating ring is less than a drive force of the resilient member, so that the first rotating ring and the second rotating ring can rotate relatively.

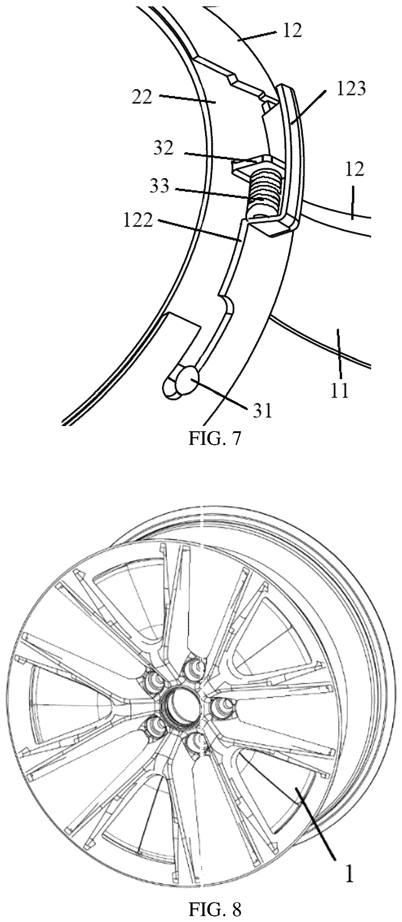

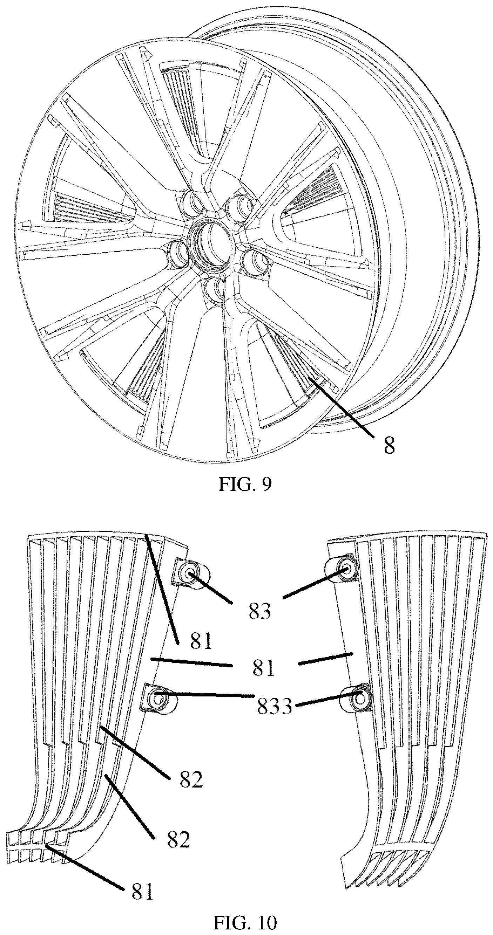

An embodiment of the present application further provides a dust removal device, as shown in FIGS. 8-10, it includes an adsorption structure 8 and the above protection device, the adsorption structure 8 includes a casing frame 81, the casing frame 81 is provided therein with at least two third blades 82, the third blades 82 are configured to adsorb dust. The shape of the casing frame can be the same as the outer contour of the first blade, and can also be of other shapes. The casing frame provides a support function. In one embodiment, multiple parallel long blades with full sheet structures and half blades with half sheet structures between the long blades with full sheet structures are mounted inside the casing frame. A contact area with air flows can be increased by the arrangement of the blades and the casing frame. In other embodiments, sheet structures with larger areas or a larger number can be set. A gap between each long blade or half blade and the long blade or half blade that is closest to the periphery thereof can be equal, and can also gradually increase outwards along a radial direction of a wheel.

In a possible embodiment, the adsorption structure 8 is further provided with a connecting member 83, the connecting member 83 is configured to connect the adsorption structure 8 in a wheel rim of an automobile. In one embodiment, the adsorption structure is provided with a mounting convex 833, and the adsorption structure is fixedly connected to the wheel rim by matching threads of fastening screws 832 and the mounting convex 833. Through connection by the mounting convex, the dust removal device is avoided from being in direct contact with an insulating washer 831 or the fastening screws 832.

In a possible embodiment, the adsorption structure 8 is further provided with a connecting member 83, the adsorption structure 8 is fixedly connected to the second protection structure 2 through the connecting member 83, and the adsorption structure 8 is arranged at a position at inner sides of the first blades 11 and capable of at least partially covering the second gaps. In one embodiment, the adsorption structure is provided with a mounting convex, and the adsorption structure is fixedly connected to the second protection structure 2 by matching threads of the screw and the mounting convex. In other embodiments, the connection manner of the connecting member is a detachable manner, which is convenient to perform replacement for the dust removal device.

In a possible embodiment, the at least two third blades 82 are of material that is insulating and is prone to generate static electricity. An insulating washer is further provided, and the casing frame 81 is isolated from the wheel flange 6 by the insulating washer. The insulating washer is of rubber or plastic material, which has functions of insulation and cushioning. In other embodiments, it is possible to use a static electricity generation device to make surfaces of the third blades have static electricity before the production of the dust removal device is completed or a new vehicle is delivered. Afterwards, during washing the vehicle or maintenance of the vehicle, after washing or replacing the dust removal device, static electricity can be sprayed onto its surface again to restore its dust adsorption effect. In the dust removal device of the present application, the adsorption structure is a non-filter screen structure, and there is no filter screen and other consumables. It can be continuously used after cleaning or collecting dust on the adsorption structure during normal maintenance or car washing of a vehicle, material consumption caused by replacement is avoided, and the problem that the adsorption effect is affected due to saturation of the adsorption structure can also be solved.

In a possible embodiment, the casing frame 81 is of insulating material.

In a possible embodiment, surfaces of the at least two third blades 82 is coated with adhesive substance. When an air flow passes through the dust removal device, dust can be adsorbed by the adhesive substance on the surfaces of the third blades.

In a possible embodiment, the casing frame 81 is connected with the wheel flange 6 by means of the fastening screws 72, bonding, clamping, or injection molding.

This embodiment further provides another type of dust removal device, which includes an adsorption structure 8 and the above protection device, the adsorption structure includes a casing frame 81, the casing frame 81 is provided therein with a mesh structure, the mesh structure is configured to adsorb dust. The mesh structure of the dust removal device is not shown by the drawings.

In a possible embodiment, the adsorption structure 8 is further provided with a connecting member 83, the connecting member 83 is configured to fixedly connect the adsorption structure 8 to the second protection structure 2.

In a possible embodiment, the adsorption structure 8 is further provided with a connecting member 83, the adsorption structure 8 is fixedly connected to the wheel flange 6 through the connecting member 83, and the adsorption structure 8 is arranged at a position at inner sides of the first blades 11 and capable of at least partially covering the second gaps.

In a possible embodiment, the mesh structure is of material that is insulating and is prone to generate static electricity.

In a possible embodiment, an insulating washer is further provided, and the casing frame 81 is isolated from the wheel flange 6 by the insulating washer.

In a possible embodiment, the casing frame 81 is of insulating material.

In a possible embodiment, a surface of the mesh structure is coated with adhesive substance.

In a possible embodiment, the casing frame 81 is connected with the wheel flange 6 by means of the fastening screws 72, bonding, clamping, or injection molding.

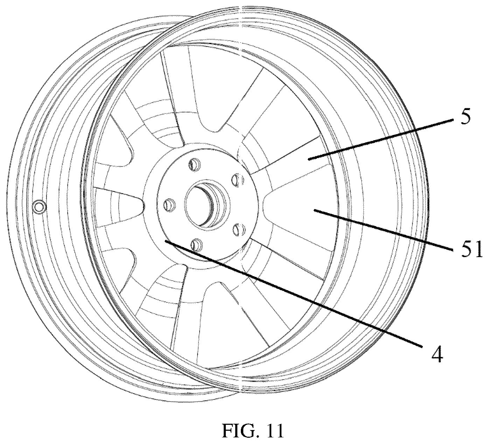

An embodiment of the present application further provides a wheel rim structure as shown in FIGS. 8, 9, and 11, which includes the above dust removal device, wherein the second rotating ring 22 is sleeved outside an automobile hub 4 and is arranged co-axially with the automobile hub 4, the adsorption structure 8 is fixedly connected to a wheel flange 6 through the connecting member 83, and the adsorption structure 8 is arranged at a position at inner sides of the first blades 11 and capable of at least partially covering the second gaps.

In a possible embodiment, an end of each first blade 11 is connected to the first rotating ring 12, another end of each first blade 11 extends to an inner surface of the wheel flange 6 and is in contact with the inner surface of the wheel flange 6; an end of each second blade 21 is connected to the second rotating ring 22, another end of each second blade 21 extends to the inner surface of the wheel flange 6 and is in contact with the inner surface of the wheel flange 6.

An embodiment of the present application further provides an automobile including the above wheel rim structure.

Working principles of embodiments provided by the present application are as follows.
(1) When a wheel is stationary or rotates at a constant speed, the first protection structure and the second protection structure do not bear an additional force generated by an additional circumferential acceleration in the circumferential direction, and the two are relatively static. Under action of prestress of the resilient member, the first blades of the first protection structure and the second blades of the second protection structure shield the gaps of the spoke, at this time, air on both sides of the wheel rim cannot flow through the gaps of the spoke.
(2) When the wheel accelerates or decelerates, the second protection structure is fixed to the wheel rim and thus rotates synchronously with the wheel. Due to impact of acceleration, the first protection structure can generate an additional inertial force in the circumferential direction. If a direction of the inertial force is opposite to a force applying direction of the resilient member, due to effect of inertia, the first rotating ring and second rotating ring is made to rotate relative to each other such that the second gaps are exposed; air at the outside of the wheel flows from the second gaps and flows through the dust removal device, the dust removal device plays a role in adsorbing dust; when braking is completed, at this time, a corresponding reaction force will be generated on the resilient member to cause the first rotating ring and second rotating ring to generate relative rotation until the first blades and second blades are in a staggered state, thereby achieving restoration of the first blades and the second blades. If the direction of the inertial force is the same as the force applying direction of the resilient member, the inertial force will be born by the buffer, and the first protection structure and second protection structure will rotate synchronously; at this time, the first blades and the second blades will appear in a staggered state.
(3) When the vehicle is traveling at a constant speed or at an increasing speed, no air flow passes through the interior of the dust removal device because the first blades and the second blades shields the gaps of the spoke; when the vehicle is braking, due to relative rotation between the first rotating ring and the second rotating ring, the second gaps are exposed, air flow in the wheel passes through the interior of the dust removal device, light dust adhering to the air flow will be attracted by static electricity and adsorbed on the surfaces of the third blades when passing through the gap between the multiple third blades. The present application is mainly aimed at collecting hazardous chemical agglomerated dust; at the same time, it only conducts air flows to adsorb dust in high intensity and high temperature braking conditions to avoid inhaling impurities in the air in non-braking conditions or low intensity and low temperature braking conditions, thus improving service time of the dust absorption device.

The embodiments provided by the present application have the following technical effect.
(1) The protection device, the dust removal device, the wheel rim structure, and the automobile provided by the present application have characteristics of simple structures and low integration cost. They are automatically turned on according to inertia generated by braking, so as to prevent a vehicle from adsorbing or collecting non-braking dust such as wheel-edge dust in the condition of no braking. Pure mechanical structures are used and no additional energy is consumed.
(2) By simple mechanical structures, it is realized that the first blades and the second blades relatively rotate to expose some of gaps of a spoke of a vehicle when the vehicle is braking. The dust removal device collects dust generated during braking using air flows passing through the gaps of the spoke. The first blades and the second blades shield the gaps of the spoke of the vehicle when the vehicle is not braking, so as to protect the dust removal device from adsorbing or collecting wheel-edge dust.
(3) Small mounting space and light weight are required. In addition, since no additional verification and matching is required, it is possible to directly perform added assembly for existing vehicles, integration is easy.
(4) The present application is mainly aimed at collecting hazardous chemical agglomerated dust; at the same time, it only conducts air flows to adsorb dust in high intensity and high temperature braking conditions to avoid inhaling impurities in the air in non-braking conditions or low intensity and low temperature braking conditions, thus improving service time of the dust absorption device.
(5) In the dust removal device of the present application, the adsorption structure is a non-filter screen structure, and there is no filter screen and other consumables. It can be continuously used after cleaning or collecting dust on the adsorption structure during normal maintenance or car washing of a vehicle, material consumption caused by replacement is avoided, and the problem that the adsorption effect is affected due to saturation of the adsorption structure can also be solved.

## Claims

1. A protection device, comprising a first protection structure (1), a second protection structure (2), and a guide structure (3); wherein the first protection structure (1) comprises a first blade (11) and a first rotating ring (12), and one end of the first blade (11) is connected to the first rotating ring (12); the second protection structure (2) comprises a second blade (21) and a second rotating ring (22), and one end of the second blade (21) is connected to the second rotating ring (22); the first rotating ring (12) is sleeved outside the second rotating ring (22), the guide structure (3) is arranged between the first rotating ring (12) and the second rotating ring (22), the first rotating ring (12) is rotatable relative to the second rotating ring (22), so that the first blade (11) and the second blade (12) overlap or are staggered; the guide structure (3) is configured for limiting a rotation travel of the first rotating ring (12) relative to the second rotating ring (22);
wherein the protection device is **characterized in that**: the first rotating ring (12) is provided with a limiting hole (121), a notch (122), and a mounting boss (123), the mounting boss (123) is connected to a side of the notch (122) close to the second blade (21), and a side of the mounting boss (123) close to the limiting hole (121) has a limiting board (1231); the guide structure (3) comprises a first protrusion (31), a stopping sheet (32), and a resilient member (33), wherein one end of the stopping sheet (32) is connected to the second rotating ring (22), and another end of the stopping sheet (32) passes through the notch (122); one end of the first protrusion (31) is connected to the second rotating ring (22), and another end of the first protrusion (31) passes through the limiting hole (121); one end of the resilient member (33) is connected to the stopping sheet (32), and another end of the resilient member (33) is connected to the limiting board (1231); the resilient member (33) is elastically deformable along a length direction of the mounting boss (123), and the first protrusion (31) is movable in the limiting hole (121).

2. The protection device according to claim 1, wherein the second rotating ring (22) further has a connection part configured to be fixed with a hub (4) of a vehicle; in a condition that the second rotating ring (22) is connected with the hub (4), the second rotating ring (22) is coaxial with the hub (4), and the second blade (21) covers a first gaps in gaps of a spoke (5) of the vehicle; the second protection structure (2) is synchronously rotatable with the hub (4), and the second protection structure (2) is capable of driving the first protection structure (1) to rotate such that the first blade (11) of the first protection structure (1) covers or exposes a second gap in the gaps of the spoke (5) of the vehicle; the second gap is a remained gap in the gaps of the spoke (5) other than the first gap.

3. The protection device according to claim 2, wherein in a condition that the vehicle is static, the first protection structure (1) and the second protection structure (2) are static relative to each other, and the first blade (11) and the second blade (21) are stagger such that the first blade (11) covers the second gap in the gaps of the spoke (5); in a condition that the vehicle drives at a constant speed or drives at an increasing speed, the first protection structure (1) and the second protection structure (2) rotate synchronously, and the first blade (11) and the second blade (21) are stagger such that the first blade (11) covers the second gap in the gaps of the spoke (5); in a condition that the vehicle drives at a decreasing speed, the first protection structure (1) and the second protection structure (2) rotate relative to each other and drive the first blade (11) and the second blade (21) at least partially overlap so as to at least partially expose the second gap in the gaps of the spoke(5).

4. The protection device according to any one of claims 1-3, wherein in a condition that the first blade (11) and the second blade (21) are stagger, the resilient member (33) is in an unstressed state, and the first protrusion (31) is at an end of the limiting hole (121) close to the mounting boss (123); in a condition that the first blade (11) and the second blade (21) overlap, the resilient member (33) is in a compressed state, and the first protrusion (31) is at an end of the limiting hole (121) away from the mounting boss (123).

5. The protection device according to any one of claims 1-3, wherein in a condition that the first blade (11) and the second blade (21) are stagger, the resilient member (33) is in an unstressed state, and the first protrusion (31) is at an end of the limiting hole (121) away from the mounting boss (123); in a condition that the first blade (11) and the second blade (21) overlap, the resilient member (33) is in a tensile state, and the first protrusion (31) is at an end of the limiting hole (121) close to the mounting boss (123).

6. The protection device according to any one of claims 1-5, wherein a length of the mounting boss (123) is not less than a length of the limiting hole (121).

7. The protection device according to any one of claims 1-6, wherein the limiting hole (121) is a strip hole, and the limiting hole (121) is configured to limit a relative rotation distance between the first protection structure (1) and the second protection structure (2).

8. The protection device according to any one of claims 1-7, wherein an end of the second blade (21) is provided with a limit guide groove (211), and an end of the first blade (11) is provided with a second protrusion (111), the second protrusion (111) slidably matches the limit guide groove (211), and relative rotation between the first blade (11) and the second blade (21) is guided and limited by sliding of the second protrusion (111) in the limit guide groove (211).

9. A dust removal device, comprising an adsorption structure (8) and a protection device according to any one of claims 1-8, wherein the adsorption structure (8) comprises a casing frame (81), the casing frame (81) is provided therein with at least two third blades (82) or a mesh structure, the third blades (82) or the mesh structure is configured to adsorb dust.

10. The dust removal device according to claim 9, wherein the adsorption structure (8) is further provided with a connecting member (83), the connecting member (83) is configured to connect the adsorption structure (8) to an inner side of a wheel flange (6) of an automobile.

11. The dust removal device according to claim 9, wherein the adsorption structure (8) is further provided with a connecting member (83), the adsorption structure (8) is fixedly connected to the second protection structure (2) through the connecting member (83), and the adsorption structure (8) is arranged at a position at an inner side of the first blade (11) and capable of at least partially covering the second gap.

12. A wheel rim structure, comprising a dust removal device according to any one of claims 9-11, wherein the second rotating ring (22) is sleeved outside an automobile hub (4) and is arranged co-axially with the automobile hub (4), the adsorption structure (8) is fixedly connected to a wheel flange (6) through the connecting member (83), and the adsorption structure (8) is arranged at a position at an inner side of the first blade (11).

13. The wheel rim structure according to claim 12, wherein an end of the first blade (11) is connected to the first rotating ring (12), another end of the first blade (11) extends to an inner surface of the wheel flange (6) and is in contact with the inner surface of the wheel flange (6); an end of the second blade (21) is connected to the second rotating ring (22), another end of the second blade (21) extends to the inner surface of the wheel flange (6) and is in contact with the inner surface of the wheel flange (6).

14. An automobile, comprising a wheel rim structure according to any one of claims 12-13.

## Patentansprüche

1. Schutzvorrichtung, umfassend eine erste Schutzstruktur (1), eine zweite Schutzstruktur (2) und eine Führungsstruktur (3), wobei die erste Schutzstruktur (1) ein erstes Blatt (11) und einen ersten Drehring (12) umfasst, wobei ein Ende des ersten Blatts (11) mit dem ersten Drehring (12) verbunden ist, wobei die zweite Schutzstruktur (2) ein zweites Blatt (21) und einen zweiten Drehring (22) umfasst, wobei ein Ende des zweiten Blatts (21) mit dem zweiten Drehring (22) verbunden ist, wobei der erste Drehring (12) außerhalb des zweiten Drehrings (22) aufgesteckt ist, wobei die Führungsstruktur (3) zwischen dem ersten Drehring (12) und dem zweiten Drehring (22) angeordnet ist, wobei der erste Drehring (12) relativ zum zweiten Drehring (22) drehbar ist, sodass das erste Blatt (11) und das zweite Blatt (21) sich überlappen oder versetzt zueinander sind, wobei die Führungsstruktur (3) dazu eingerichtet ist, einen Drehweg des ersten Drehrings (12) relativ zum zweiten Drehring (22) zu begrenzen,
wobei sich die Schutzvorrichtung dadurch auszeichnet, dass der erste Drehring (12) mit einem Begrenzungsloch (121), einer Aussparung (122) und einem Montagevorsprung (123) versehen ist, wobei der Montagevorsprung (123) mit einer Seite der Aussparung (122) verbunden ist, die dem zweiten Blatt (21) zugewandt ist, wobei an einer dem Begrenzungsloch (121) zugewandten Seite des Montagevorsprungs (123) eine Begrenzungsplatte (1231) vorgesehen ist, wobei die Führungsstruktur (3) einen ersten Vorsprung (31), ein Sperrblech (32) und ein Federelement (33) umfasst, wobei ein Ende des Sperrblechs (32) mit dem zweiten Drehring (22) verbunden ist und das andere Ende des Sperrblechs (32) durch die Aussparung (122) hindurchgeführt ist, wobei ein Ende des ersten Vorsprungs (31) mit dem zweiten Drehring (22) verbunden ist und das andere Ende des ersten Vorsprungs (31) durch das Begrenzungsloch (121) hindurchgeführt ist, wobei ein Ende des Federelements (33) mit dem Sperrblech (32) verbunden ist und das andere Ende des Federelements (33) mit der Begrenzungsplatte (1231) verbunden ist, wobei das Federelement (33) entlang einer Längenrichtung des Montagevorsprungs (123) elastisch verformbar ist und der erste Vorsprung (31) im Begrenzungsloch (121) beweglich ist.

2. Schutzvorrichtung nach Anspruch 1, wobei der zweite Drehring (22) ferner ein Verbindungsteil aufweist, das zur Befestigung an einer Nabe (4) eines Fahrzeugs eingerichtet ist, wobei in einem Zustand, in dem der zweite Drehring (22) mit der Nabe (4) verbunden ist, der zweite Drehring (22) koaxial zur Nabe (4) ist und das zweite Blatt (21) einen ersten Spalt in den Speichenspalten (5) des Fahrzeugs abdeckt, wobei die zweite Schutzstruktur (2) synchron mit der Nabe (4) drehbar ist und die zweite Schutzstruktur (2) die erste Schutzstruktur (1) antreiben kann, sodass das erste Blatt (11) der ersten Schutzstruktur (1) einen zweiten Spalt in den Speichenspalten (5) des Fahrzeugs abdeckt oder freigibt, wobei der zweite Spalt ein verbleibender Spalt in den Speichenspalten (5) ist, der nicht der erste Spalt ist.

3. Schutzvorrichtung nach Anspruch 2, wobei in einem Zustand, in dem das Fahrzeug steht, die erste Schutzstruktur (1) und die zweite Schutzstruktur (2) relativ zueinander unbeweglich sind und das erste Blatt (11) und das zweite Blatt (21) so versetzt sind, dass das erste Blatt (11) den zweiten Spalt in den Speichenspalten (5) abdeckt, wobei in einem Zustand, in dem das Fahrzeug mit konstanter Geschwindigkeit oder beschleunigt fährt, die erste Schutzstruktur (1) und die zweite Schutzstruktur (2) synchron rotieren und das erste Blatt (11) und das zweite Blatt (21) so versetzt sind, dass das erste Blatt (11) den zweiten Spalt in den Speichenspalten (5) abdeckt, wobei in einem Zustand, in dem das Fahrzeug verzögert fährt, die erste Schutzstruktur (1) und die zweite Schutzstruktur (2) relativ zueinander rotieren und das erste Blatt (11) und das zweite Blatt (21) sich zumindest teilweise überlappen, sodass der zweite Spalt in den Speichenspalten (5) zumindest teilweise freigegeben wird.

4. Schutzvorrichtung nach einem der Ansprüche 1 bis 3, wobei in einem Zustand, in dem das erste Blatt (11) und das zweite Blatt (21) versetzt sind, das Federelement (33) unbelastet ist und sich der erste Vorsprung (31) an einem Ende des Begrenzungslochs (121) befindet, das dem Montagevorsprung (123) zugewandt ist, wobei in einem Zustand, in dem das erste Blatt (11) und das zweite Blatt (21) sich überlappen, das Federelement (33) komprimiert ist und sich der erste Vorsprung (31) an einem Ende des Begrenzungslochs (121) befindet, das vom Montagevorsprung (123) abgewandt ist.

5. Schutzvorrichtung nach einem der Ansprüche 1 bis 3, wobei in einem Zustand, in dem das erste Blatt (11) und das zweite Blatt (21) versetzt sind, das Federelement (33) unbelastet ist und sich der erste Vorsprung (31) an einem Ende des Begrenzungslochs (121) befindet, das vom Montagevorsprung (123) abgewandt ist, wobei in einem Zustand, in dem das erste Blatt (11) und das zweite Blatt (21) sich überlappen, das Federelement (33) gespannt ist und sich der erste Vorsprung (31) an einem Ende des Begrenzungslochs (121) befindet, das dem Montagevorsprung (123) zugewandt ist.

6. Schutzvorrichtung nach einem der Ansprüche 1 bis 5, wobei eine Länge des Montagevorsprungs (123) nicht kleiner als die Länge des Begrenzungslochs (121) ist.

7. Schutzvorrichtung nach einem der Ansprüche 1 bis 6, wobei das Begrenzungsloch (121) als Langloch ausgebildet ist und das Begrenzungsloch (121) dazu eingerichtet ist, den relativen Drehweg zwischen der ersten Schutzstruktur (1) und der zweiten Schutzstruktur (2) zu begrenzen.

8. Schutzvorrichtung nach einem der Ansprüche 1 bis 7, wobei ein Ende des zweiten Blatts (21) mit einer Begrenzungsführungsnut (211) versehen ist und ein Ende des ersten Blatts (11) mit einem zweiten Vorsprung (111) versehen ist, wobei der zweite Vorsprung (111) mit der Begrenzungsführungsnut (211) verschiebbar korrespondiert und eine Relativdrehung zwischen dem ersten Blatt (11) und dem zweiten Blatt (21) durch Gleiten des zweiten Vorsprungs (111) in der Begrenzungsführungsnut (211) geführt und begrenzt wird.

9. Staubentfernungsvorrichtung, umfassend eine Adsorptionsstruktur (8) und eine Schutzvorrichtung nach einem der Ansprüche 1 bis 8, wobei die Adsorptionsstruktur (8) einen Gehäuserahmen (81) umfasst, wobei der Gehäuserahmen (81) darin mit mindestens zwei dritten Blättern (82) oder einer Gitterstruktur versehen ist, wobei die dritten Blätter (82) oder die Gitterstruktur dazu eingerichtet sind, Staub zu adsorbieren.

10. Staubentfernungsvorrichtung nach Anspruch 9, wobei die Adsorptionsstruktur (8) ferner mit einem Verbindungselement (83) versehen ist, wobei das Verbindungselement (83) dazu eingerichtet ist, die Adsorptionsstruktur (8) mit einer Innenseite eines Radflansches (6) eines Kraftfahrzeugs zu verbinden.

11. Staubentfernungsvorrichtung nach Anspruch 9, wobei die Adsorptionsstruktur (8) ferner mit einem Verbindungselement (83) versehen ist, wobei die Adsorptionsstruktur (8) fest mit der zweiten Schutzstruktur (2) über das Verbindungselement (83) verbunden ist und die Adsorptionsstruktur (8) an einer Position an einer Innenseite des ersten Blatts (11) angeordnet ist und den zweiten Spalt zumindest teilweise abdecken kann.

12. Felgenstruktur, umfassend eine Staubentfernungsvorrichtung nach einem der Ansprüche 9 bis 11, wobei der zweite Drehring (22) außerhalb einer Kraftfahrzeugnabe (4) aufgesteckt ist und koaxial zur Kraftfahrzeugnabe (4) angeordnet ist, wobei die Adsorptionsstruktur (8) über das Verbindungselement (83) fest mit einem Radflansch (6) verbunden ist und die Adsorptionsstruktur (8) an einer Position an der Innenseite des ersten Blatts (11) angeordnet ist.

13. Felgenstruktur nach Anspruch 12, wobei ein Ende des ersten Blatts (11) mit dem ersten Drehring (12) verbunden ist, während das andere Ende des ersten Blatts (11) sich bis zu einer Innenfläche des Radflansches (6) erstreckt und mit der Innenfläche des Radflansches (6) in Kontakt steht, wobei ein Ende des zweiten Blatts (21) mit dem zweiten Drehring (22) verbunden ist, während das andere Ende des zweiten Blatts (21) sich bis zur Innenfläche des Radflansches (6) erstreckt und mit der Innenfläche des Radflansches (6) in Kontakt steht.

14. Kraftfahrzeug, umfassend eine Felgenstruktur nach einem der Ansprüche 12 bis 13.

## Revendications

1. Dispositif de protection, comprenant une première structure de protection (1), une seconde structure de protection (2), et une structure de guidage (3) ; dans lequel la première structure de protection (1) comprend une première lame (11) et une première bague rotative (12), et une extrémité de la première lame (11) est reliée à la première bague rotative (12) ; la seconde structure de protection (2) comprend une deuxième lame (21) et une seconde bague rotative (22), et une extrémité de la deuxième lame (21) est reliée à la seconde bague rotative (22) ; la première bague rotative (12) est manchonnée à l'extérieur de la seconde bague rotative (22), la structure de guidage (3) est disposée entre la première bague rotative (12) et la seconde bague rotative (22), la première bague rotative (12) peut tourner par rapport à la seconde bague rotative (22) de sorte que la première lame (11) et la deuxième lame (21) se chevauchent ou soient décalées ; la structure de guidage (3) est conçue pour limiter une course de rotation de la première bague rotative (12) par rapport à la seconde bague rotative (22) ;
dans lequel le dispositif de protection est **caractérisé en ce que** : la première bague rotative (12) est pourvue d'un trou de limitation (121), d'une encoche (122) et d'un bossage de montage (123), le bossage de montage (123) est relié à un côté de l'encoche (122) proche de la deuxième lame (21), et un côté du bossage de montage (123) proche du trou de limitation (121) a une plaque de limitation (1231) ; la structure de guidage (3) comprend une première saillie (31), une feuille d'arrêt (32) et un élément élastique (33), dans lequel une extrémité de la feuille d'arrêt (32) est reliée à la seconde bague rotative (22), et l'autre extrémité de la feuille d'arrêt (32) passe à travers l'encoche (122) ; une extrémité de la première saillie (31) est reliée à la seconde bague rotative (22), et l'autre extrémité de la première saillie (31) passe à travers le trou de limitation (121) ; une extrémité de l'élément élastique (33) est reliée à la feuille d'arrêt (32), et l'autre extrémité de l'élément élastique (33) est reliée à la plaque de limitation (1231) ; l'élément élastique (33) est élastiquement déformable selon une direction de la longueur du bossage de montage (123), et la première saillie (31) peut se déplacer dans le trou de limitation (121).

2. Dispositif de protection selon la revendication 1, dans lequel la seconde bague rotative (22) a en outre une partie de liaison conçue pour être fixée avec un moyeu (4) d'un véhicule ; lorsque la seconde bague rotative (22) est reliée au moyeu (4), la seconde bague rotative (22) est coaxiale avec le moyeu (4), et la deuxième lame (21) recouvre un premier espace parmi des espaces d'un rayon (5) du véhicule ; la seconde structure de protection (2) peut tourner de manière synchrone avec le moyeu (4), et la seconde structure de protection (2) peut entraîner la première structure de protection (1) en rotation de sorte que la première lame (11) de la première structure de protection (1) recouvre ou découvre un second espace parmi les espaces du rayon (5) du véhicule ; le second espace est un espace restant parmi les espaces du rayon (5) autre que le premier espace.

3. Dispositif de protection selon la revendication 2, dans lequel, lorsque le véhicule est statique, la première structure de protection (1) et la seconde structure de protection (2) sont statiques l'une par rapport à l'autre, et la première lame (11) et la deuxième lame (21) sont décalées de sorte que la première lame (11) recouvre le second espace parmi les espaces du rayon (5) ; lorsque le véhicule roule à vitesse constante ou à vitesse croissante, la première structure de protection (1) et la seconde structure de protection (2) tournent de manière synchrone, et la première lame (11) et la deuxième lame (21) sont décalées de sorte que la première lame (11) recouvre le second espace parmi les espaces du rayon (5) ; lorsque le véhicule roule à vitesse décroissante, la première structure de protection (1) et la seconde structure de protection (2) tournent l'une par rapport à l'autre et entraînent la première lame (11) et la deuxième lame (21) pour se chevaucher au moins partiellement afin de découvrir au moins partiellement le second espace parmi les espaces du rayon (5).

4. Dispositif de protection selon l'une quelconque des revendications 1 à 3, dans lequel, lorsque la première lame (11) et la deuxième lame (21) sont décalées, l'élément élastique (33) est dans un état non contraint, et la première saillie (31) est située au niveau d'une extrémité du trou de limitation (121) proche du bossage de montage (123) ; lorsque la première lame (11) et la deuxième lame (21) se chevauchent, l'élément élastique (33) est dans un état comprimé, et la première saillie (31) est située au niveau d'une extrémité du trou de limitation (121) opposée au bossage de montage (123).

5. Dispositif de protection selon l'une quelconque des revendications 1 à 3, dans lequel, lorsque la première lame (11) et la deuxième lame (21) sont décalées, l'élément élastique (33) est dans un état non contraint, et la première saillie (31) est située au niveau d'une extrémité du trou de limitation (121) opposée au bossage de montage (123) ; lorsque la première lame (11) et la deuxième lame (21) se chevauchent, l'élément élastique (33) est dans un état de traction, et la première saillie (31) est située au niveau d'une extrémité du trou de limitation (121) proche du bossage de montage (123).

6. Dispositif de protection selon l'une quelconque des revendications 1 à 5, dans lequel une longueur du bossage de montage (123) est supérieure ou égale à une longueur du trou de limitation (121).

7. Dispositif de protection selon l'une quelconque des revendications 1 à 6, dans lequel le trou de limitation (121) est un trou en forme de bande, et le trou de limitation (121) est conçu pour limiter une distance de rotation relative entre la première structure de protection (1) et la seconde structure de protection (2).

8. Dispositif de protection selon l'une quelconque des revendications 1 à 7, dans lequel une extrémité de la deuxième lame (21) est pourvue d'une rainure de guidage de limitation (211), et une extrémité de la première lame (11) est pourvue d'une seconde saillie (111), la seconde saillie (111) est adaptée de manière coulissante à la rainure de guidage de limitation (211), et une rotation relative entre la première lame (11) et la deuxième lame (21) est guidée et limitée par un coulissement de la seconde saillie (111) dans la rainure de guidage de limitation (211).

9. Dispositif de dépoussiérage, comprenant une structure d'adsorption (8) et un dispositif de protection selon l'une quelconque des revendications 1 à 8, dans lequel la structure d'adsorption (8) comprend un cadre de boîtier (81), le cadre de boîtier (81) est pourvu dans celui-ci d'au moins deux troisièmes lames (82) ou d'une structure en maille, les troisièmes lames (82) ou la structure en maille sont conçues pour adsorber des poussières.

10. Dispositif de dépoussiérage selon la revendication 9, dans lequel la structure d'adsorption (8) est en outre pourvue d'un élément de liaison (83), l'élément de liaison (83) est conçu pour relier la structure d'adsorption (8) à une face interne d'un flasque de roue (6) d'un véhicule automobile.

11. Dispositif de dépoussiérage selon la revendication 9, dans lequel la structure d'adsorption (8) est en outre pourvue d'un élément de liaison (83), la structure d'adsorption (8) est reliée de manière fixe à la seconde structure de protection (2) par l'intermédiaire de l'élément de liaison (83), et la structure d'adsorption (8) est disposée au niveau d'une position au niveau d'un côté interne de la première lame (11) et peut recouvrir au moins partiellement le second espace.

12. Structure de jante de roue, comprenant un dispositif de dépoussiérage selon l'une quelconque des revendications 9 à 11, dans laquelle la seconde bague rotative (22) est manchonnée à l'extérieur d'un moyeu (4) d'automobile et disposée coaxialement avec le moyeu (4) d'automobile, la structure d'adsorption (8) est reliée de manière fixe à un flasque de roue (6) par l'intermédiaire de l'élément de liaison (83), et la structure d'adsorption (8) est disposée au niveau d'une position au niveau d'un côté interne la première lame (11).

13. Structure de jante de roue selon la revendication 12, dans laquelle une extrémité de la première lame (11) est reliée à la première bague rotative (12), l'autre extrémité de la première lame (11) s'étendant vers une surface interne du flasque de roue (6) et est en contact avec la surface interne du flasque de roue (6) ; une extrémité de la deuxième lame (21) est reliée à la seconde bague rotative (22), l'autre extrémité de la deuxième lame (21) s'étendant vers la surface interne du flasque de roue (6) et est en contact avec la surface interne du flasque de roue (6).

14. Véhicule automobile, comprenant une structure de jante de roue selon l'une quelconque des revendications 12 à 13.
